# EUROPÄISCHE PATENTSCHRIFT

(11) **EP 0 808 238 B1**
(45) Veröffentlichungstag und Bekanntmachung des Hinweises auf die Patenterteilung: **19.09.2001**
(21) Anmeldenummer: 96901791.2
(22) Anmeldetag: 07.02.1996
(51) Int. Cl.: B28B 19/00, B28B 7/18

(54) **VERFAHREN ZUR HERSTELLUNG VON WÄRMEISOLIERTEN TAFELN FÜR DIE GROSSTAFELBAUWEISE**
PROCESS FOR THE PRODUCTION OF HEAT INSULATION PANELS FOR LARGE PANEL CONSTRUCTION
PROCEDE POUR LA FABRICATION DE PANNEAUX CALORIFUGES POUR LA CONSTRUCTION EN GRANDS PANNEAUX

(30) Priorität: 09.02.1995 DE 19504235
(43) Veröffentlichungstag der Anmeldung: 26.11.1997
(73) Patentinhaber: IPA-ISORAST INTERNATIONAL S.A., Panama (PA)
(72) Erfinder: KRECKE, Edmond, D., L-6315 Beaufort (LU)
(74) Vertreter: Zwirner, Gottfried, Dipl.-Ing. Dipl.-W.-Ing.
(86) Internationale Anmeldenummer: EP9600505
(87) Internationale Veröffentlichungsnummer: WO9624476

(56) Entgegenhaltungen:
- EP-A- 0 139 215
- EP-A- 0 219 894
- WO-A-92/21834
- AU-B- 542 634
- CA-A- 996 732
- CH-A- 585 330
- DE-A- 3 038 967
- DE-A- 3 309 820
- FR-A- 1 051 673
- FR-A- 1 283 364
- FR-A- 2 507 647
- FR-A- 2 584 437
- GB-A- 954 969
- NL-A- 6 803 702
- US-A- 2 416 559
- US-A- 3 745 058
- BETONWERK + BFT FERTIGTEIL-TECHNIK, Bd. 59, Nr. 4, April 1993, WIESBADEN , DE, Seiten 112-117, XP000364809 J. GILLIG: "FERTIGTEILWERKE DER NEUEN GENERATION-IMBAU IN HENNIGSDORF"

## Beschreibung

Für ein rationelles Bauen haben sich Großtafeln eingeführt. Üblicherweise werden solche Tafeln aus armiertem Beton in einem Betonwerk hergestellt und dann zur Baustelle transportiert. Es ist auch bereits bekannt, doppelschalige Tafeln herzustellen, deren Zwischenraum mit einem Wärmeisolationsmaterial, beispielsweise einem Schaumstoff, gefüllt ist. Dabei treten jedoch Probleme durch Korrosion an den Verbindungsstäben zwischen den beiden Schalen auf, wenn im Winter der Taupunkt in diesem Bereich unterschritten wird und eine Dauereinwirkung von Feuchtigkeit stattfindet. Darüber hinaus erfordert die Montage der bekannten Großplatten einen beträchtlichen Aufwand an den Verbindungsstellen der Tafeln, insbesondere im Bereich von Gebäudeecken und beim Anschluß von Innenwänden.

Die FR A 2 584 437 zeigt beispielsweise die Herstellung einer solchen Tafel. Ferner beschreibt die FR A 2 507 647 sowohl eine Konstruktionstafel als auch ein Verfahren zu ihrer Herstellung. Dabei wird mit einer Gießwanne gearbeitet, um die Konstruktionsplatten zu fertigen, die eine Isolierschicht und eine Betonschicht enthalten. Die Verwendung einer solchen Gießwanne erzeugt jedoch kaum zu bewältigende Schwierigkeiten bei der Fertigung von Großtafeln.

Die Erfindung hat sich die Aufgabe gestellt, ein Verfahren anzugeben, mit dem wärmeisolierte Tafeln rationell und mit großer Genauigkeit hergestellt werden können. Gleichzeitig sollen die damit hergestellten Großtafeln leicht zu montieren sein, bereits alle späteren Öffnungen für Türen, Fenster und dergleichen enthalten und die spätere Installation von Rohren, Leitungen und dergleichen möglichst erleichtern. Darüber hinaus soll eine sehr gute Wärmedämmung ohne Wärmebrücken und ohne Korrosionsgefahren erzielt werden. Die Lösung der Aufgabe wird durch die im Anspruch 1 angegebenen Verfahrensschritte erreicht.

Die mit dem Verfahren hergestellten Tafeln, die für tragende und nichttragende Wände sowie Stützmauern verwendet werden können, besitzen eine gute Wärmedämmung aufgrund der auf der späteren Außenseite der Tafeln angeordneten Hartschaumplatte, die große Dicke besitzen kann. Mit Hilfe der mit Haftvermittler festgelegten Verbindungsorgane, beispielsweise in Form bekannter Verbinder gemäß EP-B-0 299 353 und zusätzlich oder auch allein in Form hinterschnittener Nuten in der Hartschaumplatte wird eine sichere und auch belastbare Dauerverbindung zwischen der Hartschaumplatte und der aufgegossenen Betonschicht erzielt. Die Betonschicht kann aus normalem Beton, aber auch einem Leichtbeton mit Luftporen oder auch einem faserverstärkten Beton bestehen. Durch das Abziehen der Betonschicht erhält man eine glatte Oberfläche mit einem genauen Dickenmaß.

Weiterbildungen der Erfindung sind Gegenstand der Unteransprüche. Wenn eine hohe Festigkeit der Tafeln verlangt wird, können vor dem Aufbringen der Betonschicht Stahlarmierungen bekannter Art mit Abstand auf die Hartschaumplatte aufgelegt werden. Dazu können auch Matten oder Netze benutzt werden, die mit Ausschnitten für die Platzhalter zur Herstellung von Tür-, Fenster- und sonstigen Öffnungen versehen sind. Zusätzlich können vor dem Aufbringen der Betonschicht Leerrohre und/oder Installationsrohre und/oder Leitungen und/oder sonstige Installationen, beispielsweise für Solaranlagen, mit einem gewünschten Abstand auf die Hartschaumplatte aufgelegt werden.

In vorteilhafter Weise können vor dem Aufbringen der Betonschicht auch noch senkrecht und/oder waagrecht und/oder diagonal verlaufende Stahlstäbe oder -rohre auf die Hartschaumplatte mit Abstand aufgelegt werden, die dann nach dem Aufbringen der Betonschicht vor ihrem vollständigen Aushärten zur Erzeugung von Hohlkammern für die spätere Einbringung von Armierungen gezogen werden. Zweckmäßig werden die Stahlstäbe oder -rohre außen mit einer Teflonschicht versehen, damit sie sich leicht ziehen lassen. Vor Ort können dann Armierungsstäbe in die Hohlkammern eingeführt und mit Beton vergossen werden. Die Armierungsstäbe können neben der Verstärkung der Tafeln zur Verbindung der Tafeln sowie auch zur Verankerung der untersten Tafel in einem Fundament dienen.

Eine Verkleidung oder Verblendung auf der Außenseite der Tafeln läßt sich besonders rationell dadurch herstellen, daß vor dem Aufbringen der Hartschaumplatte eine Materialschicht auf die Tischfläche aufgelegt wird, die die spätere Außenverblendung oder -verkleidung der Tafel bildet. Auf diese Materialschicht bringt man einen Haftvermittler zur Verbindung mit der Hartschaumplatte auf. Die Materialschicht kann aus einem gegebenenfalls glasfaserverstärkten Kunstharzputz, einem Kratz- oder Reibeputz oder auch einem sonstigen Mineralputz bestehen. Desgleichen können Flachverblender verwendet werden, die zweckmäßig auf einem Glasfasergewebe vormontiert und mit einem Haftputz versehen sind. In allen Fällen wird zweckmäßig vor dem Aufbringen der Materialschicht eine Teflonschicht, beispielsweise in Form von Folien, auf die Tischplatte aufgelegt, um später eine leichte Trennung zu ermöglichen. Der hohe Anpreßdruck des auf die Hartschaumplatte aufgegossenen Betons sorgt dann für eine gute Haftung zwischen der Materialschicht und dem Hartschaum.

Zur rationellen Herstellung einer Innenverkleidung der Tafeln kann in Weiterbildung der Erfindung vorgesehen sein, daß nach dem Abziehen der Betonschicht eine Materialschicht auf die Betonschicht haftend aufgebracht wird, die die späteren Innenverkleidung der Tafel bildet. Hierzu kann eine gegebenenfalls faserverstärkte tapezier- oder streichfähige Glättmasse auf Zement- oder Zellulose-Basis verwendet werden, die durch Prägewalzen ihre zukünftige Oberflächenstruktur in Form einer Rauhfaser- oder Glasfasertapete mit beispielsweise Fischgrätenmuster erhält. Desgleichen können auch formaldehydfreie und wasserfeste Spanplatten über Haftvermittler auf die Betonoberfläche aufgebracht werden, um eine tapezierfähige Wandfläche zu schaffen. Weiterhin besteht die Möglichkeit, eine Strukturmatte einzusetzen, die der Oberfläche Strukturmuster vermittelt und später abgezogen werden kann. Gleichzeitig können auch noch Farbstoffe als Endbehandlung aufgetragen werden. Die Materialschicht kann zweckmäßig maschinell durch ein über die gesamte Tischbreite laufendes Silo mit einstellbarer Schlitzdüse erfolgen, wobei eine Beschickung des Silos, vorzugsweise von oben, durch einen Zwangsmischer unter Schwerkraft durchgeführt wird.

Wenn die Tafeln an einer Gebäudeecke passend und ohne Nachbearbeitung aneinandergestellt werden sollen, so werden zweckmäßig die Seitenkanten einschließlich der Hartschaumplatte und der Betanschicht sowie gegebenenfalls der Materialschichten für die Außen- und Innenverkleidung mit einer unter 45° nach innen verlaufenden Abschrägung versehen. Die Ecktafeln passen dann genau und fugenlos aneinander. Mit Vorteil wird dabei die Betonschicht im Bereich der Abschrägung mit einer im Querschnitt halbkreisförmigen Ausnehmung in Form einer parallel zu den Seitenkanten verlaufenden Rinne versehen, in die Ösen oder Schlaufen der Armierung hineinragen. Nach dem Aneinanderstellen der Ecktafeln können dann diese durch Einschieben eines Armierungsstabes in die Ösen oder Schlaufen sicher verbunden werden. Die durch die beiden Rinnen gebildete, hohlförmige Kammer mit den Ösen und Armierungen wird dann mit Beton vergossen.

Beim Auflegen von Installationsrohren und -leitungen auf die Hartschaumplatte vor dem Aufgießen des Betons können zweckmäßig im Bereich der Rohr- und Leitungsenden auf der Ober- und/oder Unterseite der Tafel Platzhalter zur Herstellung von Installations- und/oder Revisionsmulden vorgesehen werden. In den Revisionsmulden können dann später nach dem Aufstellen der Tafeln Verbindungen hergestellt und kontrolliert werden.

Während die erfindungsgemäßen Großtafeln auf der Außenseite mit einer Wärmeisolation in Form der Hartschaumplatte versehen sind, brauchen Zwischenwände im Inneren des Gebäudes im allgemeinen nicht wärmeisoliert zu sein. Um jedoch den Anschluß solcher Tafeln ohne Wärmeisolation an die Außenwandtafeln zu erleichtern, wird in Weiterbildung der Erfindung vorgesehen, daß die Oberseite der Betonschicht mit einer parallel zu den Seitenflächen verlaufenden Nut versehen wird. In solche Nuten können dann Zwischenwandtafeln eingelagert werden. Wiederum enthalten die Nuten zweckmäßig Ösen oder Schlaufen, die mit entsprechenden Ösen oder Schlaufen an den seitlichen Außenkanten der Zwischenwandtafeln zusammenwirken und nach Einschieben einer Armierungsstange eine sichere Festlegung ermöglichen. Die Nuten können dann anschließend mit Beton ausgegossen werden.

Eine rationelle Fertigung von Tafeln nach der Erfindung kann dadurch ermöglicht werden, daß mehrere Tische parallel nebeneinander angeordnet werden, so daß gleichzeitig mehrere Tafeln hergestellt werden können.

Die Hartschaumplatten können entweder vorgefertigt auf den bzw. die Tische aufgelegt werden. Es besteht jedoch in Weiterbildung der Erfindung auch die Möglichkeit, die Hartschaumplatten mittels eines Extruders mit einstellbarer Breitschlitzdüse aufzubringen. Bei mehreren, nebeneinander angeordneten Tischen können die Hartschaumplatten nacheinander für alle Tische extrudiert werden.

Die Tischfläche wird zweckmäßig rechteckig ausgebildet mit einer Länge von beispielsweise 12 bis 18 m und einer Breite von beispielsweise etwa 4 m. An den Kanten können Maßunterteilungen angebracht werden, die eine präzise Positionierung von Platzhaltern und sonstigen Teilen sowie auch der äußeren Randbegrenzungen ermöglichen. Die Maßunterteilungen können zusätzlich als Raststellen für Lehren ausgebildet sein, oder es können solche Raststellen zusätzlich vorgesehen werden.

Für ein möglichst paßgenaues und fugenloses Bauen mit Tafeln nach der Erfindung kommt es sehr auf eine genaue Maßhaltigkeit der Tafeln an. Hier sieht eine Weiterbildung vor, daß nach dem Abbinden der Betonschicht und gegebenenfalls der Innen- und Außenverkleidungsschicht die Seitenflächen der Tafel über die gesamte Höhe auf ein genaues Längenmaß der Tafel und gleichzeitig auf ein genaues Winkelmaß von 90° bzw. 45° gefräst werden. Bei der gleichzeitigen Herstellung mehrerer übereinanderliegender Tafeln kann das Fräsen gleichzeitig für alle Tafeln erfolgen. Zweckmäßig verwendet man dazu zwei Fräsen für die beiden Seitenflächen, wobei die Fräsen präzise auf den richtigen Abstand und das richtige Winkelmaß eingestellt werden.

Nach einer Weiterbildung der Erfindung kann zum Herstellen mehrerer Tafeln auf einem Tisch nach wenigstens teilweiser Verfestigung der Betonschicht und gegebenenfalls der Innen- und Außenverkleidungsschicht das Verfahren entsprechend der vorstehenden Erläuterung wiederholt werden, wobei jetzt nicht die Tischfläche, sondern die Betonschicht bzw. die Innenverkleidungsschicht der fertigen Tafel als Montagefläche für eine weitere Tafel dient. Diese kann dann wiederum für eine dritte Tafel als Montagefläche verwendet werden und so weiter. Zur Trennung der Tafeln kann eine Folie auf die Betonschicht bzw. Innenverkleidungsschicht der jeweils unteren Tafel gelegt werden. wenn die aufeinanderliegenden Tafeln jeweils mit einer unter 45° nach innen verlaufenden Abschrägung versehen sind, können die jeweils aufgeschichteten Tafeln kürzer bemessen werden, derart, daß die Seitenflächen aller aufeinanderliegender Tafeln gemeinsam auf ein genaues Längenmaß und ein genaues Winkelmaß von 45° gefräst werden können.

Wenn die erfindungsgemäßen Tafeln nach der Herstellung aus der horizontalen Lage auf der Tischfläche in eine für den Transport, die Zwischenlagerung und die Montage erforderliche vertikale Lage gebracht werden, besteht normalerweise bei den sehr großen Tafeln eine Beschädigungsgefahr durch Verwindung oder durch Rißbildung. Zur Vermeidung solcher Schäden sieht eine Weiterbildung der Erfindung vor, daß der Tisch bzw. die Tische schwenkbar ausgebildet sind, derart, daß die Tafeln mit Unterstützung auf ihrer gesamten Fläche in die vertikale Lage überführt werden können. Das Schwenken der Tische kann mechanisch oder auch hydraulisch erfolgen.

Um die hergestellten Tafeln möglichst gut zu trocknen und das Abbinden zu beschleunigen, kann vorgesehen sein, daß die Tischfläche beheizbar ist. Die Hartschaumplatte sorgt zwar für eine Wärmeisolation, trotzdem findet aber ein ausreichender Wärmeübergang zur Betonschicht statt. Bei Herstellung von Tafeln ohne Wärmeisolation für Innenwände ist dann eine besonders schnelle Abbindung erzielbar. Eine gute Verdichtung der Betonschicht läßt sich dadurch erreichen, daß der Tisch als Rütteltisch ausgebildet ist.

Eine besonders vorteilhafte Weiterbildung sieht dabei vor, daß vor dem Aufbringen der Hartschaumplatte und gegebenenfalls der Innenverkleidungsschicht ein L-förmiger Montagebock auf den bzw. jeden Tisch aufgelegt wird. Die lange Schenkelfläche des Montagebocks bedeckt dabei mit ihrer Außenseite die Tischfläche und bildet mit ihrer Innenseite die Montagefläche für die Schichten der Tafeln. Die kurze Schenkelfläche des Montagebocks bildet eine Anschlag- und Aufstellfläche für die zukünftige Unterseite der Tafeln. Die Montageböcke können beispielsweise aus Stahlblech oder Stahlprofilen hergestellt werden. Nach dem Schwenken des Tisches bzw. der Tische in die vertikale Lage stehen dann die fertigen Tafeln auf dem kurzen Schenkel der Montageböcke und können zusammen mit diesen transportiert werden. Dazu weisen die Montageböcke zweckmäßig an ihrer Oberkante der langen Schenkelfläche Haltevorrichtungen in Form beispielsweise von Ösen für einen Kran auf. Die Haltevorrichtungen können dabei so gestaltet und angebracht sein, daß die Böcke mit den Tafeln leicht schräg hängen, so daß die Tafeln sich an die lange Schenkelfläche anlehnen. In dieser Position können die Tafeln dann auch beispielsweise auf einen Lastwagen gestellt werden. Dazu weist zweckmäßig die Unterseite der kurzen Schenkelfläche im Querschnitt keilförmige Aufstellelemente auf, derart, daß der Montagebock so geneigt steht, daß die Tafel bzw. Tafeln sich an die lange Schenkelfläche anlegen.

Nachfolgend wird das erfindungsgemäße Verfahren anhand eines Ausführungsbeispiels in Verbindung mit den Zeichnungen gezeigt. Es zeigen:
- Fig. 1: einen Tisch zur Durchführung des Verfahrens mit einer teilweise geschnittenen und geöffneten Großtafel;
- Fig. 2: eine auf einem L-förmigen Montagebock stehende Großtafel in vertikaler Lage.

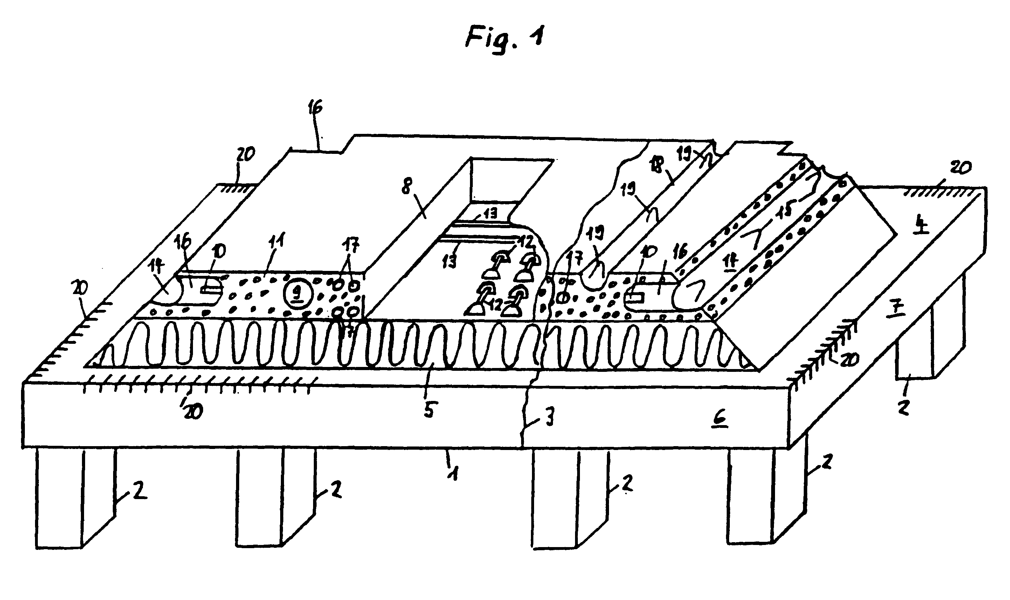

In Fig. 1 ist ein Tisch 1 mit Füßen 2 zur Durchführung des erfindungsgemäßen Verfahrens schematisch dargestellt. Der Tisch kann beispielsweise eine Länge von 18 m und eine Breite von 4 m haben. Zur Vereinfachung der Darstellung ist, wie eine Bruchlinie 3 andeutet, der Tisch 1 in seiner Länge verkürzt gezeichnet. Auf die Tischfläche 4 ist eine Hartschaumplatte 5 aufgebracht. Diese Platte kann entweder vorgefertigt sein oder mittels eines Extruders (nicht gezeigt) mit Breitschlitzdüse auf die Fläche 4 extrudiert werden. Eine rationellere Fertigung läßt sich dann erreichen, wenn mehrere Tische 4 mit ihren Längsseiten 6 oder auch ihren Stirnseiten 7 aneinandergestellt werden. Dann kann eine Hartschaumplatte 5 nacheinander auf alle Tischflächen 4 extrudiert werden.

Nach dem Aufbringen der Hartschaumplatte 5 werden Platzhalter (nicht dargestellt) in Form von Rahmen oder dergleichen zur Erzeugung von Tür-, Fenster- und sonstigen Öffnungen sowie eventuell auch von inneren Hohlkammern auf die Hartschaumplatte 5 aufgelegt. Eine solche Türöffnung ist mit 8 bezeichnet. Zusätzlich können Leer- und Installationsrohre 9 sowie Leitungen aufgebracht werden, deren Enden mit 10 bezeichnet sind. Vor dem Aufgießen einer Betonschicht 11 auf die Hartschaumplatte 5 legt man Verbindungsorgane 12 auf die Hartschaumplatte 5 per Haftvermittler auf. Die Verbindungsorgane 12 bestehen im Ausführungsbeispiel aus in Längsmitte geteilten, hantelförmigen Verbindern aus Beton gemäß EP-B-0 299 353, so daß sie sich mit der aufgegossenen Betonschicht 11 verbinden und für einen guten Zusammenhalt der Hartschaumplatte 5 und der Betonschicht 11 sorgen. Eine zusätzliche Verbesserung wird mit Hilfe von Nuten 13 mit hinterschnittenem, trapezförmigem Querschnitt (nicht dargestellt) erreicht. Der aufgegossene Beton der Schicht 11 dringt in diese Nuten ein und verbessert ebenfalls den Zusammenhalt zwischen der Platte 5 und der Schicht 11. Zur Vereinfachung der zeichnerischen Darstellung sind lediglich zwei Nuten 13 dargestellt. In der Praxis werden jedoch die Nuten auf der Gesamtfläche der Hartschaumplatte 5 angebracht. Entsprechendes gilt für die Verbindungsorgane 12.

Die Hartschaumplatte 5 und die Betonschicht 11 werden an beiden Stirnseiten mit einer in der Darstellung nach oben verlaufenden Abschrägung unter 45° versehen. Dadurch können die Großtafeln an einer Gebäudeecke direkt und fugenlos aneinandergestellt werden. Zur Verbindung der beiden zusammenstoßenden Tafeln ist die Betonschicht 5 durch Einlegen eines entsprechenden Platzhalters vor dem Aufgießen mit einer im Querschnitt halbkreisförmigen Rinne 14 versehen, in die Ösen oder Schlaufen 15 einer in die Betonschicht 11 eingelegten Armierung hineinragen. Nach dem Zusammenstellen von zwei Tafeln an einer Gebäudeecke kann dann ein Armierungsstab (nicht dargestellt) durch die Ösen 15 der beiden Tafeln hindurchgesteckt werden, wodurch eine sichere Verbindung erzielt wird. Anschließend gießt man den durch die beiden zusammenliegenden Rinnen 14 gebildeten, kreisförmigen Hohlraum mit Beton aus.

Um ein Verbinden der Leitungsenden 10 sowie auch anderer Installationen und spätere Revisionen und Reparaturen zu ermöglichen, sind im Bereich der Leitungsenden 10 sowie an den Ecken der Tafel Mulden 16 mit Hilfe aufgelegter Platzhalter erzeugt worden.

Um später vor Ort zusätzliche Armierungen einbringen zu können, die die Tafel in bestimmten Bereichen, beispielsweise nahe einer Türöffnung 8 verstärken und die gegenseitige Verbindung von Tafeln sowie eine Verankerung im Fundament ermöglichen, sind rohrförmige Hohlräume 17 vorgesehen, die im Ausführungsbeispiel in Vertikalrichtung der Tafel verlaufen. Die Hohlräume 17 werden durch positioniertes Auflegen von teflonisierten Stahlstäben auf die Hartschaumplatte 8 erzeugt. Nach dem Aufgießen der Betonschicht 11 und vor deren vollständigem Aushärten zieht man dann die Stahlstäbe, und es bleiben die Hohlräume zurück.

Die Betonschicht 11 bildet im fertigen Gebäude die Innenseite und die Hartschaumplatte 5 die Außenseite. Zwischenwände (nicht dargestellt) lassen sich auf einfache und sichere Weise mit einer aufgestellten Tafel dadurch verbinden, daß eine halbkreisförmige, parallel zu den Stirnflächen verlaufende Nut 18 vorgesehen wird, in die wiederum Schlaufen oder Ösen 19 der Armierung hineinragen. Eine Innenwand kann dann auf die gleiche Weise in der Nut 18 festgelegt werden, wie bei einer Eckverbindung von Tafeln mit Hilfe der Ösen 15.

Der Tisch 1 weist an seinen Seiten- und Stirnkanten 6, 7 Maßunterteilungen 20 auf, die mit Hilfe von Lehren (nicht dargestellt) ein sehr präzises Positionieren der einzelnen Tafelelemente ermöglicht. Die Maßunterteilungen können gleichzeitig Raststellen darstellen.

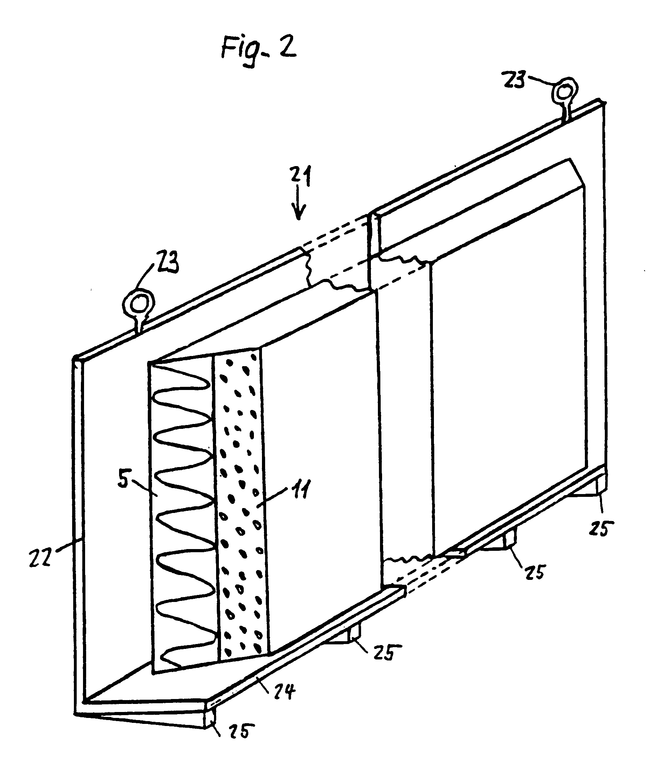

Nach Fertigstellen einer Tafel muß diese für den Transport, gegebenenfalls eine Zwischenlagerung, und für die spätere Montage in die vertikale Lage gebracht werden. Dies kann durch Schwenken des Tisches 1 mit beispielsweise einer hydraulischen Einrichtung erfolgen. Der spätere Transport und eine Zwischenlagerung von Tafeln wird wesentlich verbessert und erleichtert, wenn vor Aufbringen der Hartschaumplatte 5 ein L-förmiger Montagebock 21 gemäß Fig. 2 mit seiner langen Schenkelfläche 22 auf die Tischfläche 4 aufgelegt wird. Nach Fertigstellung einer Tafel kann dann der Montagebock 21 statt des gesamten Tisches 1 in die vertikale Lage geschwenkt werden. Dazu weist der Montagebock 21 Ösen 23 zum Einhängen von Kranhaken auf. Die fertigen Tafeln stehen dann auf keilförmigen Aufstellelementen 25, die unterhalb der kurzen Schenkelfläche 24 derart angeordnet sind, daß der Montagebock 21 leicht schräg steht und dabei die Tafel 5, 11 sich an die lange Schenkelfläche 22 anlehnt. In dieser leicht schrägen Lage lassen sich Montageböcke, die zweckmäßig Rücken an Rücken stehen, mit den aufgesetzten Tafeln gefahrlos transportieren und zwischenlagern.

## Patentansprüche

1. Verfahren zur Herstellung von wärmeisolierten Tafeln für die Großtafelbauweise, mit den folgenden Verfahrensschritten:
a) auf wenigstens einen ebenen Tisch (1) wird eine Hartschaumplatte (5) aufgebracht,
b) auf die Hartschaumplatte (5) werden Platzhalter in Form von Rahmen oder dergleichen zur Herstellung von Tür-, Fenster- und sonstigen Öffnungen (8, 14, 16, 18) sowie von inneren Hohlkammern genau positioniert aufgelegt,
c) auf die verbleibenden freien Flächen der Hartschaumplatte (5) werden Verbindungsorgane (12) aufgebracht und vorzugsweise durch Haftvermittler festgelegt oder/und vorzugsweise hinterschnittene Nuten (13) im Bereich der freien Flächen in diesen vorgesehen,
d) Aufgießen und Verdichten einer Betonschicht (11) auf die mit einer äußeren Begrenzung versehene Hartschaumplatte (5),
e) Abziehen der Betonschicht (11) auf ein genaues Dickenmaß der Tafel über die gesamte Fläche und Glätten der Oberfläche.

2. Verfahren nach Anspruch 1,
**dadurch gekennzeichnet, daß** vor dem Schritt d) Stahlarmierungen mit Abstand auf die Hartschaumplatte (5) aufgelegt werden.

3. Verfahren nach Anspruch 1 oder 2,
**dadurch gekennzeichnet, daß** vor dem Verfahrensschritt d) Leer- und/oder Installationsrahre (9) und/oder Leitungen (10) und/oder sonstige Installationen mit einem gewünschten Abstand auf die Hartschaumplatte (5) aufgelegt werden.

4. Verfahren nach Anspruch 1, 2 oder 3,
**dadurch gekennzeichnet, daß** vor dem Verfahrensschritt d) senkrecht und/oder waagrecht und/oder diagonal verlaufende, teflonisierte Stahlstäbe oder -rohre auf die Hartschaumplatte (5) mit Abstand aufgelegt werden, die nach dem Schritt d) vor dem vollständigen Aushärten zur Erzeugung von Hohlkammern (17) für die spätere Einbringung von Armierungen gezogen werden.

5. Verfahren nach einem der Ansprüche 1 bis 4,
**dadurch gekennzeichnet, daß** vor dem Verfahrensschritt a) eine Materialschicht auf die Tischfläche (4) aufgebracht wird, die die spätere Außenverblendung der Tafel bildet, und daß auf die Materialschicht eine Haftvermittlerschicht zur Verbindung mit der Hartschaumplatte (5) aufgebracht wird.

6. Verfahren nach einem der Ansprüche 1 bis 5,
**dadurch gekennzeichnet, daß** nach dem Abziehen der Betonschicht (11) auf ein genaues Deckmaß der Tafel über die gsamte Fläche und dem Glätten der Oberfläche eine Materialschicht auf die Betonschicht (11) haftend aufgebracht wird, die die spätere Innenverkleidung der Tafel bilde.

7. Verfahren nach einem der Ansprüche 1 bis 6,
**dadurch gekennzeichnet, daß** zur Herstellung mehrerer Tafeln mehrere Tische (1) parallel nebeneinander angeordnet werden.

8. Verfahren nach Anspruch 7,
**dadurch gekennzeichnet, daß** die Hartschaumplatte (5) mittels eines Extruders mit einstellbarer Breitschlitzdüse aufgebracht wird.

9. Verfahren nach einem der Ansprüche 1 bis 8,
**dadurch gekennzeichnet, daß** die Seitenkanten der Tafel einschließlich der Hartschaumplatte (5) und der Betonschicht (11) sowie gegebenenfalls der Materialschichten für die Außenverblendung und die Innenverkleidung mit einer unter 450 nach innen verlaufenden Abschrägung versehen werden.

10. Verfahren nach Anspruch 9,
**dadurch gekennzeichnet, daß** die Betonschicht (11) im Bereich der Abschrägung mit einer im Querschnitt halbkreisförmigen Ausnehmung in Form einer parallel zu den Seitenkanten verlaufenden Rinne (14) versehen werden, in die Ösen (15) oder Schlaufen der Armierung hineinragen.

11. Verfahren nach einem der Ansprüche 1 bis 10,
**dadurch gekennzeichnet, daß** beim Verfahrensschritt b) im Bereich der Rohr- oder Leitungsenden (10) an der Ober- und/oder Unterseite der Tafel Platzhalter zur Herstellung von Installations- und/oder Revisionsmulden (16) vorgesehen werden.

12. Verfahren nach einem der Ansprüche 1 bis 11,
**dadurch gekennzeichnet, daß** die Oberseite der Betonschicht (11) mit einer parallel zu den Seitenflächen verlaufenden Nut (18) zum Einbinden einer Zwischenwand versehen wird.

13. Verfahren nach Anspruch 12,
**dadurch gekennzeichnet, daß** in die Nut (18) Ösen (19) oder Schlaufen der Armierung hineinragen.

14. Verfahren nach einem der Ansprüche 1 bis 13,
**dadurch gekennzeichnet, daß** eine rechteckig ausgebildete Tischfläche (4) mit Maßunterteilungen (20) an den Kanten verwendet wird.

15. Verfahren nach Anspruch 14,
**dadurch gekennzeichnet, daß** die Maßunterteilungen (20) als Rasterstellen verwendet werden.

16. Verfahren nach einem der Ansprüche 1 bis 15,
**dadurch gekennzeichnet, daß** nach dem Abbinden der Betonschicht (11) und gegebenenfalls der Innen- und Außenverkleidungsschicht die Seitenflächen der Tafel über die gesamte Höhe der Tafel auf ein genaues Längenmaß und gleichzeitig auf ein genaues Winkelmaß von 90° bzw. 45° gefräst werden.

17. Verfahren nach einem der Ansprüche 1 bis 16,
**dadurch gekennzeichnet, daß** zum Herstellen mehrerer Tafeln auf einem Tisch (1) nach wenigstens teilweiser Verfestigung der Betonschicht (11) und gegebenenfalls der Innen- und Außenverkleidungsschicht das Verfahren nach einem der Ansprüche 1 bis 16 mit der Betonschicht (11) bzw. der Innenverkleidungsschicht als Montagefläche ein- oder mehrmals wiederholt wird.

18. Verfahren nach einem der Ansprüche 1 bis 17,
**dadurch gekennzeichnet, daß** der Tisch (1) bzw. die Tische geschwenkt werden, derart, daß die Tafel bzw. Tafeln aus der horizontalen in die vertikale Lage gebracht werden.

19. Verfahren nach einem der Ansprüche 1 bis 18,
**dadurch gekennzeichnet, daß** die Tischfläche (4) beheizt wird.

20. Verfahren nach einem der Ansprüche 1 bis 19,
**dadurch gekennzeichnet, daß** der Tisch (1) als RÜtteltisch verwendet wird.

21. Verfahren nach einem der Ansprüche 1 bis 20,
**dadurch gekennzeichnet, daß** vor dem Aufbringen der Hartschaumplatte (5) und gegebenenfalls der Innenverkleidungsschicht ein L-färmiger Montagebock (21) auf den bzw. jeden Tisch (1) aufgelegt wird, dessen lange Schenkelfläche (22) mit ihrer Außenseite die Tischfläche (4) bedeckt und mit ihrer Innenseite die Montagefläche für die Schichten der Tafel bildet, und dessen kurze Schenkelfläche (24) eine Anschlag- und Aufstellfläche für die Unterseite der Tafel bildet.

22. Verfahren nach Anspruch 21,
**dadurch gekennzeichnet, daß** an der Oberkante der langen Schenkelfläche (22) des Montagebocks (21) mit Haltevorrichtungen, beispielsweise Ösen (23), für einen Kran versehen wird.

23. Verfahren nach Anspruch 21 oder 22,
**dadurch gekennzeichnet, daß** auf der Unterseite der kurzen Schenkelfläche (24) im Querschnitt keilförmige Aufstellelemente (25) verwendet werden, derart, daß der Montagebock so geneigt gestellt wird, daß die Tafel bzw. Tafeln an die lange Schenkelfläche (22) angelegt werden.

## Claims

1. A method of producing heat-insulating panels for large-panel construction, with the following steps:
a) a rigid foam sheet (5) is placed on at least one flat table (1),
b) locating members in the form of frames or the like for producing door, window or other openings (8, 14, 16, 18) and internal hollow chambers are placed in exact position on the rigid foam sheet (5),
c) connecting means (12) are placed on the remaining free surfaces of the rigid foam sheet (5) and are fastened by bonding agents and/or are formed with preferably undercut grooves (13) in the region of their free surfaces,
d) a concrete layer (11) is cast and compacted on the rigid foam sheet (5), which has an outer boundary, and
e) the concrete layer (11) is stripped so that the panel has an exact thickness over its entire surface, and the surface is smoothed.

2. A method according to claim 1, **characterised in that** before step d), spaced-apart steel reinforcements are placed on the rigid foam sheet (5).

3. A method according to claim 1 or 2, **characterised in that** before step d), empty conduits and/or electrical-wiring conduits (9) and/or cables (10) and/or other installations at a desired spacing are placed on the rigid foam sheet (5).

4. A method according to claim 1, 2 or 3, **characterised in that** before step d), vertical and/or horizontal and/or diagonal Teflon-coated steel rods or tubes spaced apart are placed on the rigid foam sheet (5) and are pulled out after step d) before complete setting, so as to form hollow chambers (17) for subsequent insertion of reinforcements.

5. A method according to any of claims 1 to 4, **characterised in that** before step a) a layer of material is placed on the table surface (4) for later external facing of the panel, and a layer of bonding agent for joining to the rigid foam sheet (5) is placed on the layer of material.

6. A method according to any of claims 1 to 5, **characterised in that** after the concrete layer (11) has been stripped off so that the panel has an exact thickness over its entire surface and after the surface has been smoothed, a layer of material is placed and stuck on the concrete layer (11) and forms the subsequent internal lining of the panel.

7. A method according to any of claims 1 to 6, **characterised in that** in order to produce a number of panels, a number of tables (1) are placed parallel to one another.

8. A method according to claim 7, **characterised in that** the rigid foam sheet (5) is applied by an extruder through an adjustable-width nozzle slot.

9. A method according to any of claims 1 to 8, **characterised in that** the side edges of the panel, including the rigid foam sheet (5), the concrete layer (11) and if required the layers of material for the external facing and the internal lining, are formed with a bevel extending inwards at 45°.

10. A method according to claim 8, **characterised in that** in the region of the bevel, the concrete layer (11) is provided with a semicircular-section recess in the form of a channel (14) which extends parallel to the side edges and into which lugs (15) or loops of the reinforcement project.

11. A method according to any of claims 1 to 10, **characterised in that** in step b) locating members for producing installation and/or inspection cavities (16) are provided on the top surface and/or underside of the panels near the ends (10) of the conduits or cables.

12. A method according to any of claims 1 to 11, **characterised in that** the top surface of the concrete layer (11) is formed with a groove (18) extending parallel to the side surfaces for tying in an intermediate wall.

13. A method according to claim 12, **characterised in that** lugs (19) or loops of the reinforcement project into the groove (18).

14. A method according to any of claims 1 to 13, **characterised by** use of a rectangular table surface (4) with graduated scales (20) at its edges.

15. A method according to claim 14, **characterised in that** the graduated scales (20) are used as grid positions.

16. A method according to any of claims 1 to 15, **characterised in that** after the concrete layer (11) and if required the inner and outer lining layer have set, the side surfaces of the panels are milled over their entire height to an exact length and also to an exact angle of 90° or 45°.

17. A method according to any of claims 1 to 16, **characterised in that** in order to produce a number of panels on a table (1) after at least partial setting of the concrete layer (11) and if required of the inner and outer lining layer, the method according to any of claims 1 to 16 is repeated one or more times, using the concrete layer (11) or the inner lining layer as an assembly surface.

18. A method according to any of claims 1 to 17, **characterised in that** the table (1) or tables are pivoted so that the panel or panels are brought from the horizontal into the vertical position.

19. A method according to any of claims 1 to 18, **characterised in that** the table surface (4) is heated.

20. A method according to any of claims 1 to 19, **characterised in that** the table (1) is used as a vibrating table.

21. A method according to any of claims 1 to 20, **characterised in that** before the rigid foam sheet (5) and if required the inner lining layer are positioned, an L-shaped assembly frame (21) is placed on the or each table (1), the outside of its long side surface (22) covers the table surface (4) and its inner side forms the assembly surface for the layers forming the panel, and its short side surface (24) forms an abutment and mounting surface for the underside of the panel.

22. A method according to claim 21, **characterised in that** retaining devices, e.g. lugs (23), for a crane are provided on the upper edge of the long side surface (22) of the assembly frame (21).

23. A method according to claim 21 or 22, **characterised in that** wedge-section mounting elements (25) are used on the underside of the short side surface (21) so that the assembly frame is placed at an angle such that the panel or panels rest against the long side surface (22).

## Revendications

1. Procédé destiné à la fabrication de panneaux d'isolation thermique pour le mode de construction de grands panneaux, comportant les phases de procédé suivantes :
a) une plaque de mousse dure (5) est placée sur au moins une table plane (1),
b) des réservations sous forme de cadres ou analogues sont placées de façon exactement positionnée sur la plaque de mousse dure (5) pour la réalisation d'ouvertures (8, 14, 16, 18) de portes, de fenêtres et autres, ainsi que d'espaces creux intérieurs,
c) sur les surfaces libres restantes de la plaque de mousse dure (5), des organes de liaison (12) sont placés et fixés de préférence avec des agents d'adhérence, et/ou des rainures (13) de préférence contre-dépouillées sont prévues dans la zone des surfaces libres,
d) coulée et compression d'une couche de béton (11) sur la plaque de mousse dure (5) munie d'une délimitation extérieure,
e) égalisation de la couche de béton (11) à une cote d'épaisseur précise du panneau sur l'ensemble de la surface, et lissage de la surface.

2. Procédé selon la revendication 1,
**caractérisé en ce que** des armatures d'acier sont placées avant la phase d) à une certaine distance sur la plaque de mousse dure (5).

3. Procédé selon la revendication 1 ou 2,
**caractérisé en ce que** des tubes vides et/ou des tubes d'installation (9) et/ou des conduites (10) et/ou d'autres installations sont placés avant la phase de procédé d) à une distance souhaitée sur la plaque de mousse dure (5).

4. Procédé selon la revendication 1, 2 ou 3,
**caractérisé en ce que** des barres ou tubes d'acier téflonisés s'étendant verticalement et/ou horizontalement et/ou en diagonale sont placés avant la phase de procédé d) à une certaine distance sur la plaque de mousse dure (5) qui, après la phase d) et avant le durcissement complet, sont retirés afin d'engendrer des espaces creux (17) pour l'insertion ultérieure d'armatures.

5. Procédé selon l'une quelconque des revendications 1 à 4,
**caractérisé en ce qu'**une couche de matériau constituant le parement extérieur ultérieur du panneau est déposée avant la phase de procédé a) sur la surface (4) de la table, et en ce qu'une couche d'adhérence est appliquée sur la couche de matériau pour la liaison avec la plaque de mousse dure (5).

6. Procédé selon l'une quelconque des revendications 1 à 5,
**caractérisé en ce que**, après l'égalisation de la couche de béton (11) à une cote de surfaçage précise du panneau sur l'ensemble de la surface et le lissage de la surface, une couche de matériau est appliquée de façon adhérente sur la couche de béton (11), laquelle constitue le revêtement intérieur ultérieur du panneau.

7. Procédé selon l'une quelconque des revendications 1 à 6,
**caractérisé en ce que** plusieurs tables (1) sont disposées parallèlement les unes à côté des autres pour la fabrication de plusieurs panneaux.

8. Procédé selon la revendication 7,
**caractérisé en ce que** la plaque de mousse dure (5) est appliquée au moyen d'une extrudeuse comportant une buse à fente large réglable.

9. Procédé selon l'une quelconque des revendications 1 à 8,
**caractérisé en ce que** les bords latéraux du panneau, y compris ceux de la plaque de mousse dure (5) et de la couche de béton (11), ainsi que le cas échéant ceux des couches de matériau pour le parement extérieur et le revêtement intérieur, sont munis d'un chanfrein s'étendant à 45° vers l'intérieur.

10. Procédé selon la revendication 9,
**caractérisé en ce que**, dans la zone du chanfrein, la couche de béton (11) est munie d'un évidement de section transversale semi-circulaire sous la forme d'une saignée (14) s'étendant parallèlement aux bords latéraux, dans laquelle pénètrent des anneaux (15) ou des crochets de l'armature.

11. Procédé selon l'une quelconque des revendications 1 à 10,
**caractérisé en ce que**, dans la zone des extrémités (10) des tubes ou conduites, des réservations sont prévues sur la face supérieure et/ou inférieure du panneau lors de la phase de procédé b) pour la réalisation de cavités d'installation et/ou de révision (16).

12. Procédé selon l'une quelconque des revendications 1 à 11,
**caractérisé en ce que** la face supérieure de la couche de béton (11) est munie d'une rainure (18) s'étendant parallèlement aux surfaces latérales, destinée à l'insertion d'une cloison de séparation.

13. Procédé selon la revendication 12,
**caractérisé en ce que** des anneaux (19) ou des crochets de l'armature pénètrent dans la rainure (18).

14. Procédé selon l'une quelconque des revendications 1 à 13,
**caractérisé en ce qu'**il est utilisé une surface (4) de table de forme rectangulaire comportant des graduations dimensionnelles (20) sur les bords.

15. Procédé selon la revendication 14,
**caractérisé en ce que** les graduations dimensionnelles (20) sont utilisées en tant que points d'encliquetage.

16. Procédé selon l'une quelconque des revendications 1 à 15,
**caractérisé en ce que**, après la prise de la couche de béton (11) et le cas échéant des couches des revêtements intérieur et extérieur, les surfaces latérales du panneau sont fraisées sur l'ensemble de la hauteur du panneau à une cote de longueur précise, et simultanément à une cote angulaire précise de 90° ou de 45°.

17. Procédé selon l'une quelconque des revendications 1 à 16,
**caractérisé en ce que**, pour la fabrication de plusieurs panneaux sur une table (1) et après la solidification, au moins partielle, de la couche de béton (11) et le cas échéant des couches des revêtements intérieur et extérieur, le procédé selon l'une quelconque des revendications 1 à 16 est répété à une ou plusieurs reprises avec la couche de béton (11) ou la couche de revêtement intérieur en tant que surface de montage.

18. Procédé selon l'une quelconque des revendications 1 à 17,
**caractérisé en ce que** la table (1) ou les tables est(sont) pivotée(s) de telle sorte que le panneau ou les panneaux soit(soient) déplacé(s) en position verticale.

19. Procédé selon l'une quelconque des revendications 1 à 18,
**caractérisé en ce que** la surface (4) de la table est chauffée.

20. Procédé selon l'une quelconque des revendications 1 à 19,
**caractérisé en ce que** la table (1) est réalisée sous la forme d'une table vibrante.

21. Procédé selon l'une quelconque des revendications 1 à 20,
**caractérisé en ce que**, avant l'application de la plaque de mousse dure (5) et le cas échéant de la couche de revêtement intérieur, un chevalet de montage (21) en forme de L est placé sur la table ou sur chaque table (1), dont la surface de la branche longue (22) recouvre par sa face extérieure la surface (4) de la table, et forme par sa face inférieure la surface de montage pour les couches du panneau, et dont la surface de la branche courte (24) forme une surface de butée et d'appui pour la face inférieure du panneau.

22. Procédé selon la revendication 21,
**caractérisé en ce que** le bord supérieur de la surface de la branche longue (22) du chevalet de montage (21) est muni de dispositifs de préhension, par exemple d'oreilles de levage (23) pour une grue.

23. Procédé selon la revendication 21 ou 22,
**caractérisé en ce que** des éléments de support (25) de section transversale cunéiforme sont utilisés sur la face inférieure de la surface de la branche courte (24), de telle sorte que le chevalet de montage soit incliné, et que le panneau ou les panneaux prenne(nt) appui contre la surface de la branche longue (22).
